# EUROPÄISCHE PATENTSCHRIFT

(11) **EP 0 691 910 B1**
(45) Veröffentlichungstag und Bekanntmachung des Hinweises auf die Patenterteilung: **02.07.1997**
(21) Anmeldenummer: 94911089.4
(22) Anmeldetag: 30.03.1994
(51) Int. Cl.: B60N 2/42

(54) **SICHERHEITSEINRICHTUNG FÜR FAHRZEUGE**
SAFETY DEVICE FOR VEHICLES
DISPOSITIF DE SECURITE POUR VEHICULES AUTOMOBILES

(30) Priorität: 31.03.1993 DE 4310473; 14.07.1993 DE 4323543
(43) Veröffentlichungstag der Anmeldung: 17.01.1996
(73) Patentinhaber: MÜLLER, Franz, D-83026 Rosenheim (DE)
(72) Erfinder: MÜLLER, Franz, D-83026 Rosenheim (DE)
(86) Internationale Anmeldenummer: DE9400353
(87) Internationale Veröffentlichungsnummer: WO9422692

(56) Entgegenhaltungen:
- DE-A- 2 344 689
- DE-A- 2 510 725
- DE-A- 4 112 579
- FR-A- 2 236 358
- GB-A- 1 043 695
- US-A- 3 917 339
- US-A- 5 167 421
- PATENT ABSTRACTS OF JAPAN vol. 15, no. 400 (M-1167) 11. Oktober 1991 & JP,A,03 164 347 (NISSAN MOTOR COMPANY LTD) 16. Juli 1991

## Beschreibung

Die Erfindung betrifft ein Verfahren zum Verringern der bei einem Aufprall eines Fahrzeugs auf ein Hindernis auf einen auf einem Sitz angegurteten bzw. mittels Airbag geschützten Fahrzeuginsassen oder auf in oder auf dem Fahrzeug befindliche Gegenstände einwirkenden Kräfte, wobei Sitz oder Gegenstände relativ zum Fahrzeug verschieblich sind, durch Vergleichen von durch Geber gemessenen Werten in einer Auswerteschaltung mit vorgegebenen Werten und in Abhängigkeit davon durch das Bewegen des Sitzes zunächst um eine gewisse Wegstrecke entgegen der Aufprallrichtung und dann in Aufprallrichtung.

Ein derartiges Verfahren ist durch eine Sicherheitseinrichtung für Kraftfahrzeuge gemäß der DE 23 44 689 A1 bekannt. Bei dem bekannten Verfahren und der bekannten Vorrichtung wird im Falle eines Aufpralls der in ein Rückhaltesystem eingeschlossene Sitz mittels einer Betätigungsvorrichtung entgegen der Fahrtrichtung bzw. in Fahrtrichtung bewegt, wobei die Sitzverzögerung im Rahmen des menschlichen Erträglichkeitsbereichs schnell ansteigt und dann auf einem in diesem Rahmen liegenden im wesentlichen konstanten Niveau gehalten wird. Hierzu umfaßt die Einrichtung ein Regelgerät, das in Abhängigkeit von Gebern die Betätigungseinrichtung verstellt. Ein erster Geber mißt die Kollisionsintensität, weitere Geber messen die Geschwindigkeitsänderung des Sitzens und/oder des Fahrzeuges. Der erste Geber ist einer druckgesteuerten Stoßkraftaufnahme beim Aufprall zugeordnet. Der zweite Geber ist am Sitz angebracht und nimmt die Sitzverzögerung ab. Die Betätigungsvorrichtung wird durch einen druckgesteuerten Zylinder gebildet.

Dieses Verfahren und diese Vorrichtung arbeiten nur dann, wenn bereits ein Aufprall erfolgt ist, was die Zeit für die Bewegung des Sitzes und das Aufblasen des Airbags stark einschränkt.

Ein solches Verfahren ist ebenfalls aus der DE 41 12 579 A1 bekannt. Bei diesem Verfahren 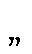 Innensystem für Kraftfahrzeuge" wird nachdem man während der Fahrt von dem Laserradar die Information erhält, daß eine Fahrzeugkollision unausweichlich ist der Sitz nur mechanisch entgegen der Fahrtrichtung (Aufprallrichtung) nach hinten gezogen. Andere Aufprallrichtungen als die Fahrtrichtung werden bei diesem Verfahren nicht berücksichtigt Diese Schrift zeigt die Merkmale des Oberbegriffs des Anspruchs 1.

Aufgabe der Erfindung ist es, ein Verfahren anzugeben, das es ermöglicht, die Zeit für die Bewegung des Sitzes zu erhöhen und davon unabhängig das Airbagsystem auszulösen.

Diese Aufgabe wird durch ein Verfahren mit den Merkmalen des Anspruchs 1 gelöst.

Vorteilhafte Ausgestaltungen der Erfindung sind den Unteransprüchen zu entnehmen.

Durch die Anwendung der Annäherungssensoren, die einen unvermeidlichen Aufprall von vorn, von hinten und auch seitlich anzeigen sollen, wird Zeit vor einem Aufprall gewonnen, die zur Änderung der Auslösekriterien der Sicherheitssysteme und Airbagsysteme genutzt werden kann.

Bei einer vorzeitigen Aufprallerkennung mit vorzeitiger Aktivierung des Sicherheitssystems und separat des Airbagsystems erhöht sich die Überlebenschance, wenn die passiven dem Zeitvorteil entsprechend ausgelegten Sicherheitssysteme aktiviert werden, wobei neben der Sitzverstellung auch das Gurtsystem mit Gurtstraffer und Gurtbanddehnung, das herkömmliche Airbagsystem (Gasgenerator und Luftsack) sowie das proconten-System geändert/ verbessert werden könnte.

Da die einwirkende Aufprallenergie über eine längere Wegstrecke energieabsorbierend abgebaut werden kann, ergibt sich eine weitgehende Entlastung des menschlichen Körpers und damit einen sanfteren Aufprallschutz für Insassen aber auch für Güter.

Der Zeitgewinn ermöglicht auch die Anwendung eines verbesserten Airbagsystems 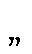 Softairbag" Sicherheitssystem, das körperumfassend zum Schutz bei einem Front-, Seiten- oder Heckaufprall eingesetzt werden kann.

Verschieden gestaltete Anordnungen von Airbags können wegen der vorzeitigen Aufprallerkennung schon viel eher mit Luft-/Gasgemisch und daher relativ langsam mit niedrigerem Anfangs- und Enddruck vollständig oder auch nur teilweise entsprechend der jeweiligen vorausberechneten Unfallschwere gefüllt und auch zeitlich und volumenmäßig bestimmbar entleert werden. Auch wenn der Fahrzeuginsasse kurz vor einem Aufprallunfall gerade eine Position in Richtung Armaturenbrett einnimmt, bei der er durch die bekannte explositionsartige Entfaltung des Luftkissens schwere Verletzungen erleiden müßte, kann er durch ein derartiges sich langsamer und weicher aufbauendes System geschützt werden. Das herkömmliche explosionsartig aufgeblasene harte Luftpolster gewährleistet zudem keinen sicheren körperangepaßten Schutz.

Das "Softairbag" Sicherheitssystem ermöglicht einen besseren den Benutzer schonenden Schutz durch ein oder mehrere körperumfassende weiche sich anschmiegende Luftkissen. Die Wirkung ist durch den großen körperdeckenden Entlastungschutz mit resultierendem höheren Energieabbau auch sicherer, außerdem ist es von Vorteil, daß kein Körperrückstoß vom Luftkissen erfolgt. Die Airbag Luftkissen können auch aus mehrwandigen Hüllen bestehen, die individuell geregelt aufblas- bzw. entleerbar sein können.

Damit der Fahrzeuginnendruck durch das Aufblasen der Airbagsysteme sich nicht weiter erhöht, kann durch Luftdruckauslaßventile ein körperschädigender Luftdruckanstieg verhindert werden.

Die Ermittlung des Verzögerungsverlaufes bei unterschiedlichen Bedingungen ist ein wichtiges Kriterium für die medizinischen Grenzwerte, es muß gesichert sein, daß der Luftsack weder zu prall noch zu schwach gefüllt ist, um optimal zu schützen. Durch das frühere Auslösen ist ein langsamerer Druckaufbau möglich, der es auch erlaubt, die Schallentwicklung der herkömmlichen Airbag-Systeme deutlich zu verringern. Durch den langsameren Druckaufbau ist es auch möglich, weitere Druckgase einzusetzen.

Nachstehend werden die Grundprinzipien der Erfindung sowie die Erfindung an Ausführungsbeispielen unter Bezug auf die Zeichnungen näher erläutert. Es zeigt:
- Fig. 1: ein Ausführungsbeispiel eines Fahrer- oder Mitfahrersitzes im Schnitt quer zur Fahrtrichtung,
- Fig. 2: den Gegenstand von Fig. 1 im Schnitt entlang der Fahrtrichtung,
- Fig. 3: verschiedene Funktionsphasen eines Sitzes bei
a - c einem Aufprall durch Auffahren
d - f durch fremdes Auffahren,
- Fig. 4: eine Draufsicht auf einen PKW in schematischer Darstellung mit diversen Zusatzeinrichtungen des Sicherheitssystems,
- Fig. 5: eine Ansicht eines Fahrzeugs mit einer verschieblichen Ladefläche für Gegenstände in schematischer Darstellung,
- Fig. 6: ein Ausführungsbeispiel eines Sitzschlittens in Draufsicht,
a - c den Sitzschlitten gemäß Fig. 6 im statischen Zustand und in Bewegung entgegen der Aufprallrichtung und dann energieabsorbierend in Aufprallrichtung, jeweils im Längsschnitt.

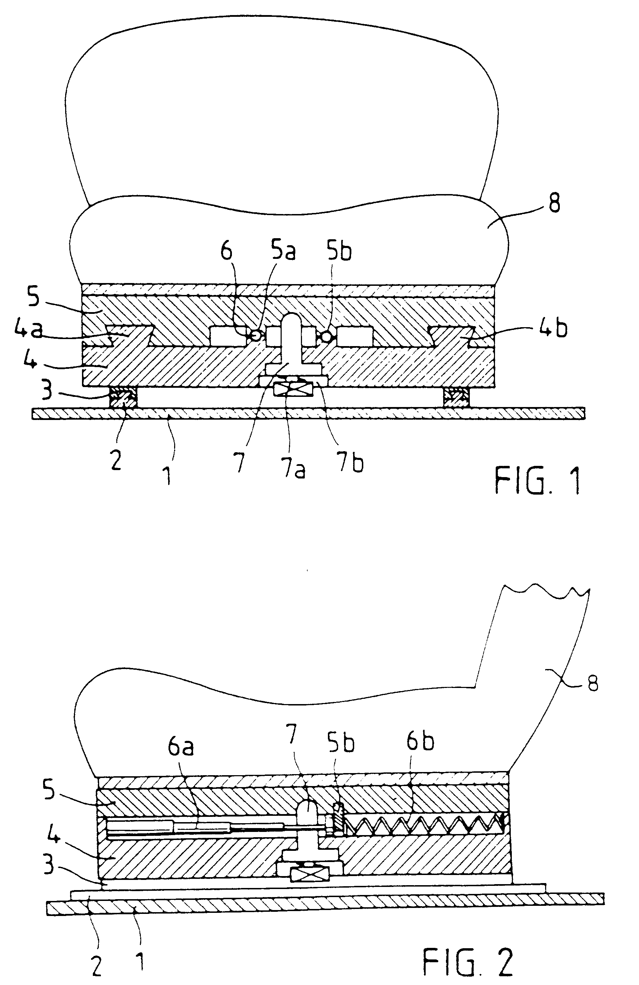

Am Beispiel eines Fahrer- oder Mitfahrersitzes gemäß der in den Fig. 1 und 2 skizzierten Ausführungsform sei Aufbau und Funktion der vorgschlagenenen Sicherheitseinrichtung erläutert. Der jeweilige, auf Schienen 2, 3 geführte Sitz 8 ist entsprechend der Größe des Fahrers wie üblich in seiner Entfernung vom Armaturenbrett einstellbar und generell mit einer an sich bekannten, von Aufprall-Annäherungssensoren 11 gesteuerten Auslöseeinheit 12 in Wirkverbindung gekoppelt.

Der Sitz selbst besteht aus einem mit dem Kfz 1 über die Schienen 2, 3 fest verbundenen Unterteil 4 sowie einem darauf in Fahrtrichtung auf Schienen 4a und 4b geführten Oberteil 5, das den Sitz trägt. Durch einen Arretierungsbolzen 7, der in eine entsprechende Ausnehmung des Oberteils 5 hineinragt, sind Ober- und Unterteil 5 bzw. 4 im Normalfall formschlüssig miteinander verbunden.

Der Arretierungsbolzen 7 kann mit einem Elektromagneten 7a gegen die Wirkung einer Feder, eines Magneten oder mittels sonstiger Entriegelungselementen 7b nach unten gezogen werden und somit die relative Bewegung zwischen Oberteil 5 und Unterteil 4 enlang der Schienen 4a bzw. 4b, also in der bzw. entgegen der Fahrtrichtung freigeben. Für seitliche Aufprallfälle kann die erfindungsgemäße Einrichtung entsprechend modifiziert sein.

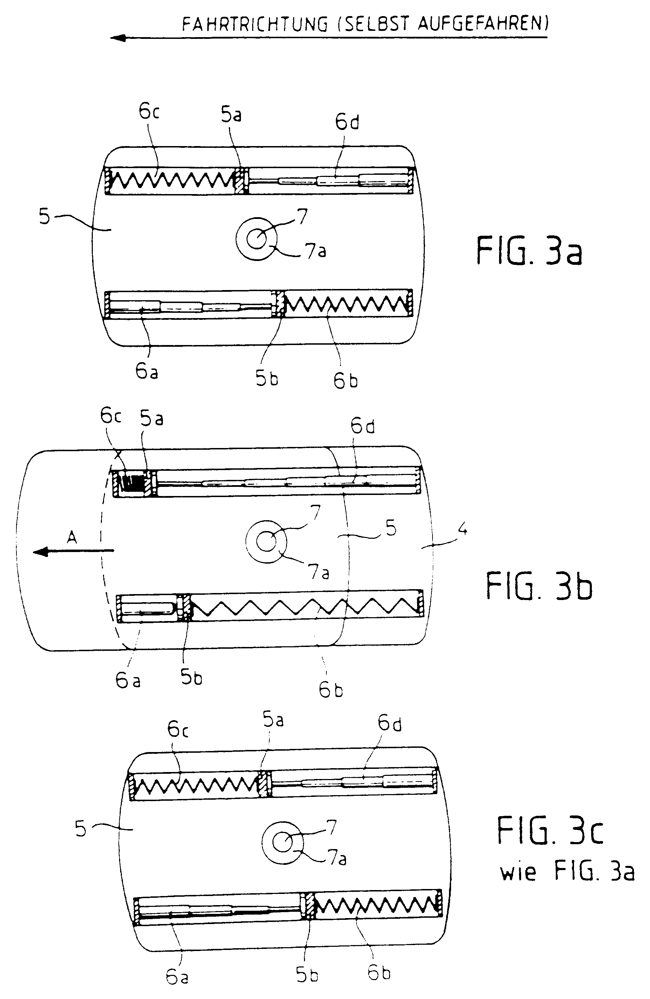

Das Oberteil 5 des Sitzes ist mit zwei Fortsätzen 5a bzw. 5b versehen, die an zwei Aktivierungselementen 6a und 6d sowie an zwei Dämpfungselementen (Energieabsorbierungselementen) 6b und 6c anlegen, die ihrerseits gegen entsprechende Fortsätze des Unterteils 4 abgestützt sind. Dabei ist entsprechend den Fig. 3a bis 3f jeweils ein Dämpfungselement 6c und ein Aktivierungselement 6a in Fahrtrichtung und ein Dämpfungselement 6b und ein Aktivierungselement 6d in Gegenrichtung ausgerichtet.

Die Wirkungsweise der beschriebenen Vorrichtung ist folgende:

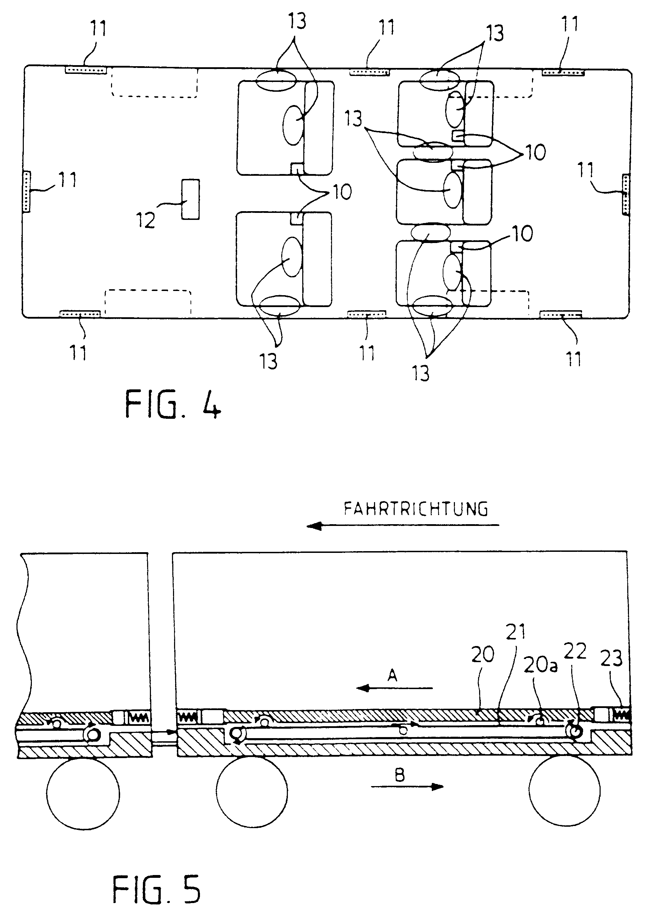

Wenn bei einem von Annäherungssensoren 11 (Fig. 4) in einer Auswerteschaltung festgestellten, nicht mehr abwendbaren Aufprall ab einer bestimmten vorausberechneten Aufprallgeschwindigkeit die vorgegebene Verzögerung überschritten wird, löst sich sofort - von der Auslöseeinheit 12 ausgelöst - über den Elektromagneten 7a der Arretierungsbolzen. Der Sitz fährt sofort impulsartig angestoßen eine bestimmbare Wegstrecke entgegen der Aufprallrichtung und wird bis zum Ende der Wegstrecke gedämpft abgebremst. Nach dem Aufprall (ca. 40 - 80 Millisekunden später), kurz bevor die Belastung des menschlichen Körpers am größten wird, fährt der Sitz unter Nutzung der Kollisionsenergie, gedämpft durch energieabsorbierende Elemente, eine vorgegebene Wegstrecke in Aufprallrichtung und dann gedämpft in seine Ausgangsstellung zurück. Der Sitz 8 kann sich auch zusätzlich zur Kollisionsenergie, kurz bevor die Belastung des menschlichen Körpers am größten wird, impulsartig angestoßen durch das Aktivierungselement 6d, wie in Fig. 3b dargestellt, von den Schienen 4a und 4b geführt, in Fahrtrichtung A bewegen. Dabei wird die Bewegung durch das energieabsorbierende Dämpfungselement 6c abgebremst, bis der Sitz 8 am Anschlag seine Bewegung beendet. Anschließend erfolgt durch Entspannung des Dämpfungselementes 6c eine rückläufige Bewegung, falls noch nötig, durch einen rücklaufenden Impuls, angestoßen durch das Aktivierungslement 6a, wobei die Bewegung wiederum durch das Dämpfungselement 6b abgebremst wird und der Sitz läuft dann in seine Ausgangsstellung (Arretierungsbolzenstellung) zurück (vgl. Fig. 3a bis 3c).

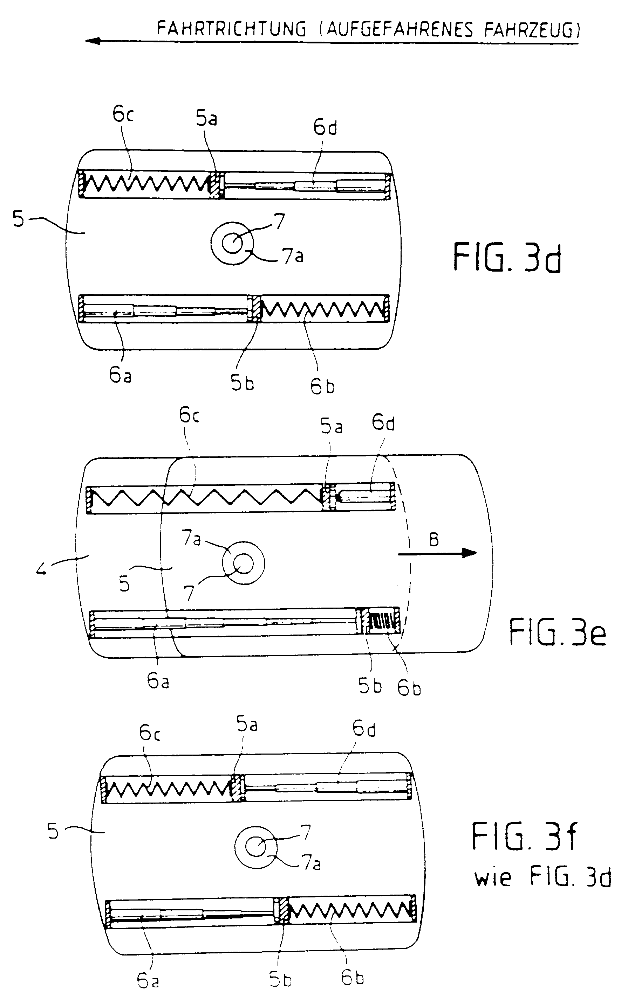

Die Vorrichtung wirkt in beiden Fahrtrichtungen, also auch bei einem auffahrenden Fahrzeug (vgl. Fig. 3d bis 3f) entgegen der Fahrtrichtung A in Richtung B sowie auch bei Seitenaufprall.

Fig. 4 veranschaulicht die Anordnung entsprechender Sitze in einem Fahrzeug. Wesentlich ist auch, daß die üblichen Sicherheitsgurte 10 nicht mehr am Fahrzeugrahmen befestigt sind, sondern am jeweiligen Sitz, um die hier vorgeschlagene Ausgleichsbewegung durchführen zu können. Aus Fig. 4 ist auch die Anordnung der Aufprall-Annäherungssensoren 11 ersichtlich sowie diejenige der Auslöseeinheit 12 Weiterhin sind der Fig. 4 einige Anordnungsmöglichkeiten von Airbags 13 zu entnehmen.

In Fig. 5 ist ein Ausführungsbeispiel einer gegen Aufprall wirkenden Sicherheitseinrichtung skizziert, die Gegenstände auf einer verschieblichen Ladefläche schützt. Die Gegenstände sind auf eine Palette 20 gestellt und dort in üblicher Weise fixiert (beispielsweise wie bei der Luftfracht im Laderaum des Flugzeugs, im Laderaum eines LKW (-Anhängers) oder eines Eisenbahnwaggons). Diese Palette 20 ist - bei dem skizzierten Ausführungsbeispiel - mit einem über Umlenkrollen 22 bewegbaren Förderband 21 kombiniert, das in eine entsprechende Verzahnung 20a eingreift. Treten nun durch die Aufprallenergie Bewegungskräfte in Pfeilrichtung A auf bzw. durch impulsartige Aktivierung, so werden diese über die Verzahnung 20a z. B. in Form von Zahnrädern, Rollen, Ketten, Raupen, Reifen, Rädern o. ä. auf das Förderband 21 übertragen und bewegen dieses in Pfeilrichtung B, so daß sich die Kräfte und Gegenkräfte gegenseitig aufheben. Selbstverständlich sind auch in diesem Falle Dämpfungs- und energieabsorbierende Einrichtungen 23 für beide Bewegungsrichtungen erforderlich. Dieses System läßt sich beliebig spezifizieren und ist praktisch für alle Verkehrssysteme konzipierbar.

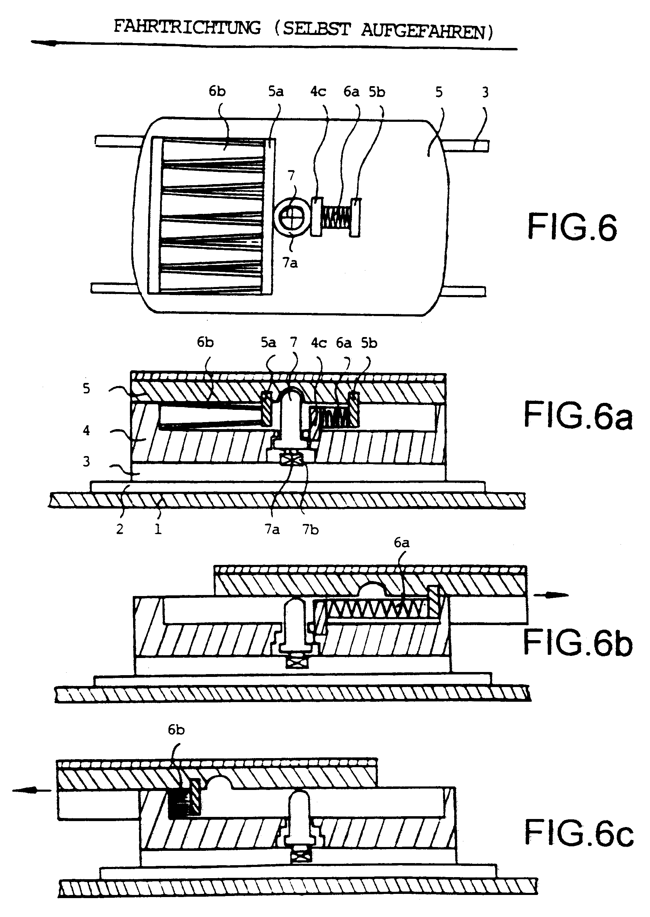

Fig. 6 zeigt ein weiteres Ausführungsbeispiel eines Sitzes in Draufsicht und 6a im Längsschnitt, wie er ähnlich in Fig. 3 dargestellt ist, wobei für gleichartige Teile gleiche Bezugszeichen verwendet sind.

Das Zurückfahren des Sitzes kurz vor einer Kollision, wie es in Fig. 6b dargestellt ist, entgegen der Aufprallrichtung läuft folgendermaßen ab:

Nachdem der Arretierungsbolzen je nach Annäherungs-Aufprallgeschwindigkeit ca. 40 - 100 Millisekunden vorher entriegelt wurde, fährt der Sitzschlitten impulsartig angestoßen eine bestimmbare Wegstrecke (je nach Sitzbelegungserkennung max. 25 cm) entgegen der Aufprallrichtung und wird bis zum Ende der Wegstrecke gedämpft abgebremst. Die zur Verfügung stehende Zeit reicht von ca. 40 bis 100 Millisekunden vor dem Aufprall bis ca. 40 bis 80 Millisekunden nach dem Aufprall. Der impulsartige Anstoß der Bewegung entgegen der Aufprallrichtung (Fig. 6b) kann mechanisch, pneumatisch, hydraulisch, elektromagnetisch oder pyrotechnisch erfolgen. Eine kosten-/aufwandgünstige Lösung wäre z. B. ein mechanischer Anstoß durch Federvorspannung oder teleskopartige Vorspannung des Sitzes oder durch sonstige Impulse. Gleichzeitig sollen die Sicherheitsgurte gestrafft werden, um durch festes Anliegen den Schutz zu erhöhen.

Nach dem Aufprall (ca. 40 - 80 Millisekunden später) kurz bevor die Belastung des menschlichen Körpers am größten wird, fährt der Sitz auf seinem Sitzschlitten unter Nutzung der Kollisionsenergie gedämpft durch energieabsorbierende Elemente eine vorgegebene bzw. bestimmbare Wegstrecke in Aufprallrichtung (Fig. 6c).

Der Sitz kann sich auch zusätzlich zur Kollisionsenergie, kurz bevor die Belastung am größten wird, durch einen kurzfristigen Impuls oder durch ein entspannendes Element eine bestimmbare Wegstrecke mit anschließender energieabsorbierender Dämpfung in Aufprallrichtung bewegen.

Falls erforderlich, bzw. crashspezifisch möglich, fährt der Sitz gegebenenfalls gedämpft in seine Ausgangsstellung zurück.

Eine weitere - nicht dargestellte - Alternative wäre, kurz bevor die Körperbelastung am größten wird, daß zeitlich und/oder beschleunigungsindividuell in Abhängigkeit von der entsprechenden Kollisionsenergie, sich zuerst die Sitzfläche allein und erst dann die Sitzlehne mit der Sitzfläche zusammen energieabsorbierend und gedämpft in Aufprallrichtung bewegt. Das heißt, die Rückenlehne bleibt im ersten Moment in einer starren festen Position. Dadurch bekommt man nicht sofort die Krafteinwirkung auf den ganzen Körper, sondern nur abgeschwächt über die Sitzfläche. Anschließend kann auch hier wiederum eine rückläufige Bewegung des gesamten Sitzes in seine Ausgangsstellung erfolgen.

Eine andere Möglichkeit wäre, daß nicht die Sitzfläche mit der Rückenlehne bzw. die Sitzfläche vorab allein einen kurzfristigen Impuls in Aufprallrichtung bekommt, wie oben beschrieben, sondern, daß z. B. durch ein in der Rückenlehne integriertes zeitlich-örtlich eingesetzt/gesteuertes Druckauf-/-abbau Mehrkammern-Airbagsystem eine Körperentlastung ermöglicht wird.

Dies kann derart erfolgen, daß bevor die Belastung des Körpers am größten wird (und der Oberkörper mit dem Kopf voran schon eine bestimmte Neigung in Aufprallrichtung trotz Rückhalte- und Airbagsystemen erreicht hat) ein erster (zeitlich gesteuerter) Airbagimpuls in Höhe des Gesäßes (örtlich gesteuert) mit einem zeitlich-örtlich-gesteuerten (Druckauf-/-abbau) Mehrkammern-Airbagsystem erfolgt und erst dann weitere Impulse über den ganzen Rücken und schließlich bis in den Nacken- und Kopfbereich sich ausbreitend einwirken.

Das heißt, je nachdem zu welchem Zeitpunkt an einer bestimmten Körperstelle die Belastung am größten ist, wird eine Körperentlastung mit Hilfe des gesteuerten Mehrkammer-Airbagsystems durch Aufblasen bzw. Entleeren einzelner Kammern unter Berücksichtigung des Körperschwerpunkts bewirkt.

Durch dieses System kann auch eine weitgehende Entlastung des menschlichen Körpers erfolgen, da bei dem kurzfristigen Impuls in Aufprallrichtung der Kopf mit dem Oberkörper entlastend über seinem Schwerpunkt aus dem Gefahrenbereich schwenkt.

Es besteht auch die Möglichkeit ein zusätzliches Fondinsassenairbagsystem anzuwenden, das in den Rückseiten der Vordersitzrückenlehnen integriert sein kann. Dieses Airbagsystem kann nicht nur Kopf und Oberkörper schützen, sondern auch den Fußbereich und soll körperumfassend sein. Beim Zurückfahren der Vordersitze im Falle eines Aufpralls (entgegen der Aufprallrichtung) wird dieses Fondinsassenairbagsystem aktiviert. Es dient zum Schutz bei einem Aufprallunfall und schützt gleichzeitig auch die Fondinsassen vor eventuellen Verletzungen, die sonst durch das Zurückfahren des Sitzes entstehen könnten. Somit wird die Absorptionsbelastung früher eingeleitet, noch bevor die gefährliche Körpervorverlagerung beginnt. Kurz bevor die Belastung des Körpers am größten ist und der Airbag noch nicht in seiner vollen Größe entfaltet ist, fährt der Vordersitz energieabsorbierend in Aufprallrichtung. Dadurch wird auch der Fondinsasse weiter entlastet. Der Abstand zur Vordersitzrückenlehne wird durch den praller werdenden Luftsack ausgeglichen.

Durch die Aktivierung des Systems durch die Annäherungssensorik kann der Vordersitz noch langsamer entgegen der Aufprallrichtung und nach einer Verweildauer von 40 - 80 Millisekunden energieabsorbierend in Aufprallrichtung bewegt werden. Es bleibt noch mehr Zeit zu einem schonenden Aufblasen des Luftsacks, mit einer daraus resultierenden Minimierung der Körperbelastung.

Unabhängig von der Auslösung der Sitzbewegung kann jedoch auch mit der gleichen Annäherungssensorik das Airbagsystem für sich vor dem Aufprall ausgelöst werden.
Dieser Fall tritt beispielsweise dann ein, wenn ein Fahrzeuginsasse nur mit Gurt- bzw. Airbagsystem geschützt werden will. Schließlich kann mit Hilfe der Annäherungssensorik auch das Airbagsystem für sich allein ausgelöst werden, ohne daß die Bewegung des Sitzes vorgesehen ist.

Es ist auch möglich, einen Seitenaufprallschutz vorzusehen, d. h. einen Schutz gegen Seitenintrusionen, Verformungen, das Eindringen von Teilen z. B. mit Hilfe eines zweischichtigen Verbundmaterials, wobei die Außenseite des Seitenaufprallschutzes aus relativ festem Material zum Schutz gegen eindringende Teile und die Innenseite zum Körper hin aus stoßdämpfendabsorbierenden-gepolstertem Material bestehen könnte. Ein derartiger Schutz könnte mit dem Gurtsystem integriert zwischen Becken und Schultergurt angeordnet sein und automatisch mit dem Gurtsystem angelegt werden. Der Seitenaufprallschutz könnte auch seitlich von der Sitzfläche bis zur Fensterhöhe hochziehbar oder seitlich in die Sitzlehne integriert sein.

Eine weitere Möglichkeit eines verbesserten Schutzes wäre die Anordnung der Vordersitze näher 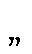 zur Mitte" um einen besseren Wirkungsschutz bei einem Seitenaufprall zu erzielen.

Die Vordersitze könnten auch z. B. diagonal zur Mitte aus dem Gefahrenbereich bewegbar angeordnet sein, wobei auch ein einzelner mittig angeordneter Vordersitz denkbar wäre.

## Patentansprüche

1. Verfahren zum Verringern der bei einem Aufprall eines Fahrzeugs auf ein Hindernis auf einen auf einem Sitz angegurteten Fahrzeuginsassen oder auf in oder auf dem Fahrzeug befindliche Gegenstände einwirkenden Kräfte, unter Verwendung von relativ zum Fahrzeug verschieblichen Sitzen oder Ladeflächen, und/oder unter Verwendung von Airbags, durch Vergleichen von durch Geber gemessenen Werten in einer Auswerteschaltung mit vorgegebenen Werten und in Abhängigkeit davon durch das Bewegen des Sitzes zunächst um eine gewisse Wegstrecke entgegen der Fahrtrichtung, wobei das Annähern eines Hindernisses durch als Geber dienende Annäherungssensoren erfaßt und ausgewertet wird,
**dadurch gekennzeichnet, daß**
nur dann, wenn ein Aufprall als unvermeidlich erkannt wird, der Sitz bzw. Gegenstand entgegen der jeweiligen Aufprallrichtung vor dem Aufprall beschleunigt und am Ende der Wegstrecke gedämpft abgebremst wird, und daß nach dem erfolgten Aufprall, jedoch bevor die auf die Personen bzw. auf die auf einer verschieblichen Ladefläche befestigten Gegenstände einwirkende Kraft am größten ist, der Sitz bzw. die Ladefläche in die jeweilige Aufprallrichtung bewegt und am Ende des Weges gedämpft abgebremst wird, und/oder die Airbags, von denen, jeder aus mehreren Kammern besteht, die unabhängig voneinander aufgeblasen und/oder entleert werden können, vor dem Aufprall aktiviert werden.

2. Verfahren nach Anspruch 1,
**dadurch gekennzeichnet, daß**
die Beschleunigung bzw. Bewegung des Sitzes bzw. der Ladefläche mittels einer Antriebsvorrichtung erfolgt.

3. Verfahren nach Anspruch 1 oder 2,
**dadurch gekennzeichnet, daß**
gleichzeitig mit dem Auslösen der Bewegung des Sitzes entgegen der Aufprallrichtung ein den hinteren und/oder vorderen Sitzen zugeordnetes Airbagsystem aktiviert wird.

4. Verfahren nach Anspruch 3,
**dadurch gekennzeichnet, daß**
unmittelbar vor oder im Moment der Bewegungsumkehr des Sitzes mindestens ein Airbag aktiviert wird.

5. Verfahren nach einem der Ansprüche 1 oder 3 oder 4,
**dadurch gekennzeichnet, daß**
mindestens ein Airbag in der Rückenlehne des Vordersitzes im Beckenbereich aktiviert wird.

6. Verfahren nach einem der Ansprüche 1 bis 5,
**dadurch gekennzeichnet, daß**
das Bewegen und Dämpfen des Sitzes oder der Ladeflächen hydraulisch, pneumatisch, mechanisch, pyrotechnisch oder elektrisch erfolgt.

7. Verfahren nach einem der Ansprüche 1 bis 6,
**dadurch gekennzeichnet, daß**
der Sitz unter einem Winkel zur Längserstreckung des Fahrzeugs oder entlang einer Kurvenbahn bewegt wird.

8. Verfahren nach einem der Ansprüche 1 bis 7,
**dadurch gekennzeichnet, daß**
jeder Airbag auch nur teilweise gefüllt und auch zeitlich und volumengemäß bestimmbar entleert werden kann.

9. Verfahren nach Anspruch 1 bis 8,
**dadurch gekennzeichnet, daß**
jeder Airbag relativ langsam mit niedrigem Anfangs- und Enddruck gefüllt und/oder entleert werden kann.

10. Verfahren nach einem der Ansprüche 1 bis 9,
**dadurch gekennzeichnet, daß**
ein oder mehrere körperumfassende weiche sich anschmiegende Luftkissen eingesetzt werden.

11. Verfahren nach einem der Ansprüche 1 bis 10,
**dadurch gekennzeichnet, daß**
ein zusätzliches Fondinsassenairbagsystem angewendet wird.

12. Verfahren nach Anspruch 11,
**dadurch gekennzeichnet, daß**
das zusätzliche Fondinsassenairbagsystem in den Rückseiten der Vordersitzrücklehnen eingebaut wird.

## Claims

1. Method for reducing the forces which, upon impact of a vehicle with an obstacle, are exerted on a passenger strapped to a seat by a seat belt or on any objects transported in or on the vehicle by use of seats or loading surfaces movable in relation to the vehicle and/or by use of airbags, by means of comparing values measured by a transmitter in an evaluation circuit with given values, and, dependant upon the results of these comparisons, by the movement of the seat, initially over a certain distance in the opposite direction to the direction of travel, whereby the proximity of an obstacle is measured and evaluated by proximity sensors serving as transmitters, characterised in that, only after an impact has been recognised as being unavoidable, before the vehicle hits the obstacle, the seat and/or the object will be accelerated in the opposite direction to that of the impact and will come to a damped stop at the end of the said certain distance, and that, after the impact, but before the force exerted on the passengers and/or on the objects secured to a movable loading surface reaches its peak value, the seat and/or the loading surface will be moved in the relevant direction of impact and come to a damped stop at the end of the said certain distance, and/or that the airbags, each consisting of several cells which can be inflated and/or deflated independently of one another, will be activated prior to the impact.

2. A method according to claim 1,
characterised in that
the seat and/or the loading surface is accelerated and/or moved by means of a driving mechanism.

3. A method according to claim 1 or 2,
characterised in that
an airbag system allocated to the front and/or rear seats is activated at the same time as the seat starts moving in the opposite direction to the direction of impact.

4. A method according to claim 3,
characterised in that
at least one airbag is activated immediately before or exactly at the moment the movement of the seat is reversed.

5. A method according to one of claims 1 or 3 or 4
characterised in that
at least one airbag in the back of the front seat is activated in the pelvic area.

6. A method according to one of claims 1 to 5,
characterised in that
the seat or the loading surfaces are moved and damped hydraulically, pneumatically, mechanically, pyrotechnically or electrically.

7. A method according to one of claims 1 to 6,
characterised in that
the seat is moved at a certain angle relative to the longitudinal axis of the vehicle or along a curved path.

8. A method according to one of claims 1 to 7,
characterised in that
each airbag can also be only partly inflated and can also be deflated over a determinable period and to a determinable volume.

9. A method according to claims 1 to 8,
characterised in that
each airbag can be inflated and/or deflated relatively slowly with low initial and final pressure.

10. A method according to one of claims 1 to 9,
characterised in that
one or more body embracing, soft, smooth airbags are used.

11. A method according to one of claims 1 to 10,
characterised in that
an additional airbag system is used for the rear seat passengers.

12. A method according to claim 11,
characterised in that
the additional airbag system for the rear seat passengers is installed in the backs of the front seats.

## Revendications

1. Procédure visant à diminuer les forces qui, lors d'un impact d'un véhicule contre un obstacle, agissent sur un passager d'un véhicule se trouvant dans un siège avec la ceinture attachée ou des objets se trouvant à l'intérieur du véhicule utilisant des sièges ou des plateformes de chargement qui son déplaçables par rapport au véhicule et/ou en utilisant des airbags en comparant, dans un circuit d'évaluation, les valeurs mesurées par des capteurs avec des valeurs prédéfinies et en déplaçant le siège en fonction de celles-ci d'abord par une certaine distance en sens inverse par rapport au sens de marche, le rapprochement à un obstacle étant enregistré et évalué par des détecteurs de proximité servant de capteurs,
caractérisée en ce que
seul si un impact est reconnu comme étant inévitable, le siège voire l'objet est accéléré avant l'impact en sens inverse à la direction d'impact, et, à la fin de la course, il est freiné de façon atténuée, et en ce qu'après l'impact intervenu, cependant avant que la force agissant sur les personnes voire les objets qui sont fixés sur une plateforme de chargement déplaçable atteigne son maximum, le siège voire la plateforme de chargement se déplace à chaque fois dans la direction de l'impact, et il est freiné de façon atténué à la fin de la course, et/ou les airbags, dont chacun comprend plusieurs chambres pouvant être gonflées et/ou dégonflées indépendamment l'une de l'autre, sont activés avant l'impact.

2. Procédure selon la revendication 1,
caractérisé en ce que
l'accélération respectivement le déplacement du siège voire de la plateforme de chargement s'effectue moyennant un dispositif d'entraînement.

3. Procédure selon la revendication 1 ou 2,
caractérisée en ce que
simultanément au déclenchement du déplacement du siège un système d'airbags affecté aux sièges arrières et/ou avant est activé on sens inverse par rapport à la direction d'impact.

4. Procédure selon la revendication 3,
caractérisée en ce que
immédiatement avant ou au moment même du renversement de déplacement du siège au moins un airbag est activé.

5. Procédure selon une des revendications 1 ou 3 ou 4,
caractérisée en ce que
au moins un airbag se trouvant dans le dossier du siège avant dans la zone du bassin est activé.

6. Procédure selon une des revendications 1 à 5,
caractérisée en ce que
le déplacement et l'atténuation du siège ou des plateformes de chargement s'effectuent par voie hydraulique, pneumatique, mécanique, pyrotechnique ou électrique.

7. Procédure selon une des revendications 1 à 6,
caractérisée en ce que
le siège est déplacé sous un angle par rapport à l'extension longitudinale du véhicule ou le long d'un chemin incurvé.

8. Procédure selon une des revendications 1 à 9,
caractérisée en ce que
chaque airbag peut également être gonflé partiellement et peut aussi être dégonflé à un moment et avec un volume déterminable.

9. Procédure selon la revendication 1 à 8,
caractérisée en ce que
chaque airbag peut être gonflé et/ou dégonflé relativement lentement avec une pression initiale et finale faible.

10. Procédure selon une des revendications 1 à 9,
caractérisée en ce que
un ou plusieurs coussins pneumatiques moux se serrant contre le corps sont utilisés.

11. Procédure selon une des revendications 1 à 10,
caractérisée en ce que
un système d'airbags supplémentaires est utilisé pour les passagers à l'arrière.

12. Procédure selon la revendication 11,
caractérisée en ce que
le système d'airbags supplémentaires pour les passagers à l'arrière est intégré dans le dos des dossiers des sièges avant.
